# EUROPEAN PATENT SPECIFICATION

(11) **EP 2 561 223 B1**
(45) Date of publication and mention of the grant of the patent: **09.01.2019**
(21) Application number: 11723648.9
(22) Date of filing: 18.04.2011
(51) Int. Cl.: F03D 9/17, F03D 9/28

(54) **WIND POWER GENERATOR COMPRISING AN AIR COMPRESSOR**
WINDKRAFTGENERATOR MIT EINEM LUFTVERDICHTER
GÉNÉRATEUR ÉOLIEN COMPRENANT UN COMPRESSEUR D'AIR

(30) Priority: 06.05.2010 IT BS20100094; 19.04.2010 IT BS20100087
(43) Date of publication of application: 27.02.2013
(73) Proprietor: Teseo S.r.L., 25015 Desenzano del Garda Brescia (IT)
(72) Inventor: GUZZONI, Gianfranco, 25015 Desenzano del Garda Brescia (IT); GUZZONI, Paolo, 25015 Desenzano del Garda Brescia (IT)
(74) Representative: Chimini, Francesco
(86) International application number: PCT/IB2011/051658
(87) International publication number: WO 2011/132124

(56) References cited:
- EP-A1- 0 104 034
- BE-A6- 1 008 885
- GB-A- 114 286
- GB-A- 2 112 463
- JP-A- 1 253 572
- US-A- 2 112 633
- US-A- 2 454 058
- US-A- 2 652 699
- US-A- 3 806 733

## Description

The present invention relates to a wind generator of compressed air and a system for the production and storage of corrpressed air comprising said generator.

In particular, it is known of in the art to make corrpressed air generators comprisi ng an air compressor 20 connected to wi nd devices, such as wi nd blades, which are driven in rotation by the effect of the wind.

The corrpressed air thus generated can be sent directly to the utilities or can be stored for example in compressed air tanks.

The devices of the prior art are not optimised however and do not permit functioning in scarce wind conditions. In addition, the limited efficiency makes it impossible to achieve adequate pressures of corrpressed air or to store large quantities of compressed air in the tanks.

Examples of known prior art devices are dislosed in documents GB114286, BE1008885A6, US2454058, EP104034, US2652699 and US2112633.

The need is therefore felt to make a wind generator of corrpressed air which is optimised, simple and inexpensive so as to enable the production and/or storage of corrpressed air even in scarce wind conditions and to ensure optimised performance at all times.

The purpose of the present invention is to overcome the drawbacks and limitations mentioned with reference to the prior art.

Such drawbacks and limitations are resolved by a wnd generator according to claim 1 and by a system according to claim 14.

Other embodiment s of the present invention are described in the subsequent claims.

Further characteristics and advantages of the present invention will be clearly corrprehensible from the description given below of its preferred non-limiting embodiments, with reference to the appended drawings, wherein:
- figure 1 is a side view of a wind generator of corrpressed air according to the invention;
- figure 2 is a view from above of the generator;

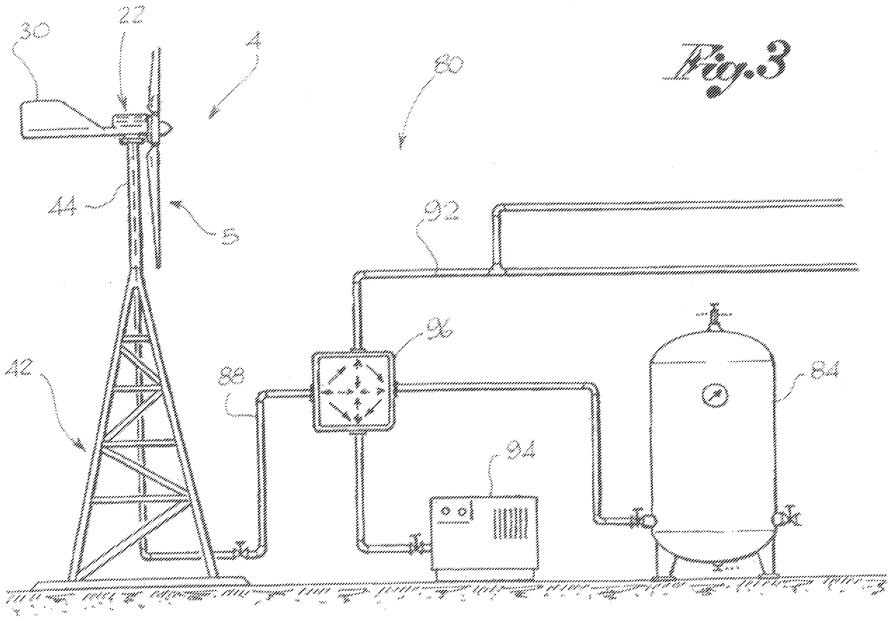

- figure 3 schematically shows a system for the generation and storage of corrpressed air;

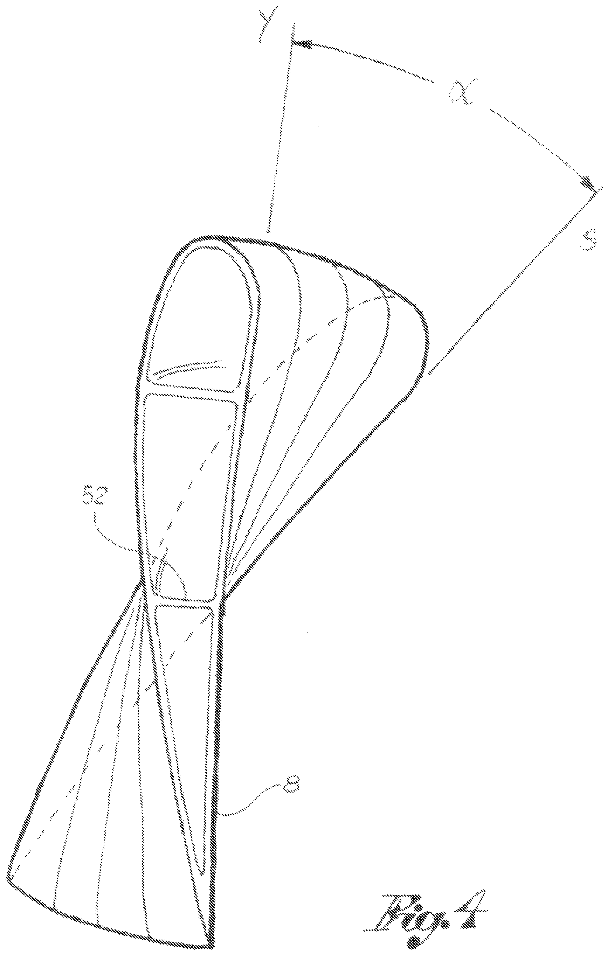

- figure 4 is an enlarged cross-section view of a wind blade of the wind generator; and

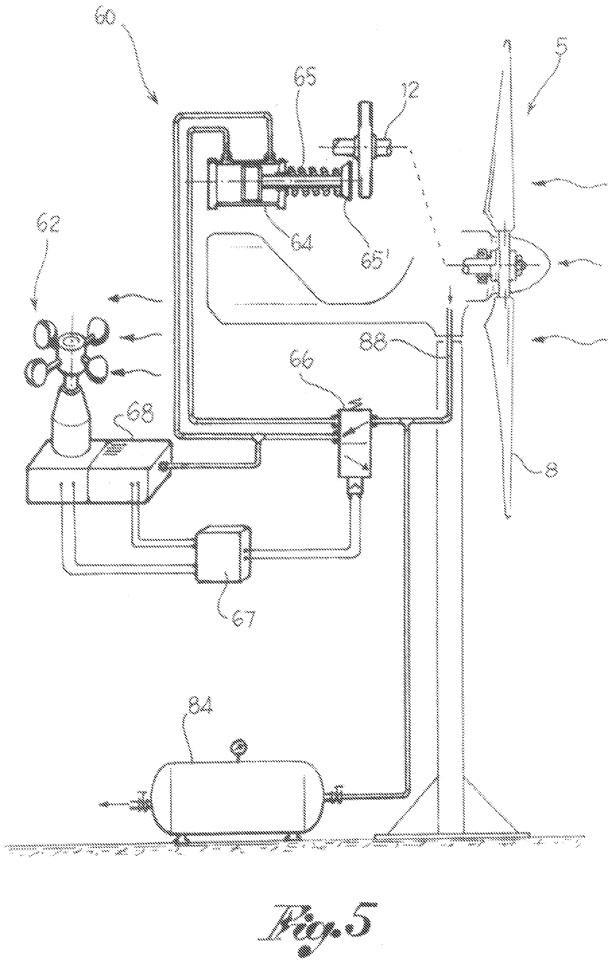

- figure 5 shows a diagram of an electro-pneumatic brake of the wind generator.

The elements or parts of elements common to the embodiments described below will be indicated using the same reference numerals.

With reference to the aforesaid draw ngs, reference numeral 4 globally denotes a wind generator of corrpressed air according to the present invention. The wind generator 4 comprises at least one wind blade 8 joined at one end to a rotation shaft 12 having a rotation axis X-X and suitable to be driven so as to rotate around said rotation axis X-X, under the influence of a flow of air 16. Consequently, the at least one wnd blade 8 and the rotation shaft 12 constitute the rotor 5 of the wind generator. Preferably, said rotor 5 comprises three wind blades, angularly distanced by 120é from each other.

At least one air compressor 20 is operatively connected to said rotation shaft 12 so as to be driven by the rotor 5 to produce compressed air. The air compressor 20 is positioned behind the rotor 5 in relation to the direction which the flow of ai r acting on the rotor comes from Consequently, the flow of air acts directly on the wind blade 8, without the interposition of elements of disturbance.

The generator 4 further comprises an air conveyor 22 which surrounds and contains the air compressor 20 at I east partially. Said air conveyor 22 has at least an entrance aperture 23, that is an air intake, suitable to convey on the air compressor 20 part of the flow of air acting on the rotor, and at least one exit aperture 24 suitable to convey the flow of air in exit at the air compressor 20.

A rear rudder 30 is positioned downstream of the air compressor 20, to direct the rotor 5 perpendicular to the air flow.

Consequently, the air conveyor 22 performs a dual function: cooling the air compressor 20 and conveying the air flow towards the rear rudder 30 so that it can position itself parallel to the direction of the wind.

In a preferred embodiment, the rotation shaft 12, the air compressor 20, the air conveyor 22 and the rudder 30 are supported by a support arm 40. Said support arm 40 is mounted at the top of a support structure 42, for example of the pylon type. Advantageously, said structure is made for example in aluminium sections, so as to prove particularly resistant and at the same time flexible to withstand even strong winds, economical to produce and easy to assemble.

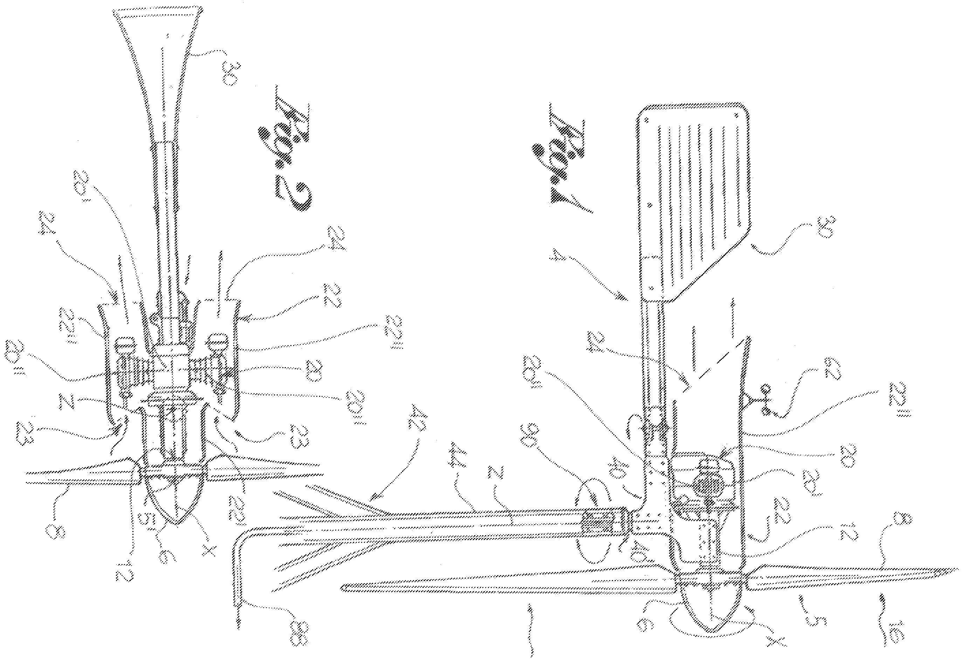

Advantageously, the support arm 40 is, further, mounted so as to rotate in relation to the vertical orientation axis Z-Z so as to be able to tilt under the effect of the thrust of the air flow acting on the rear rudder 30. For example, the support arm 40 is vertically pivoted to a post 44 of the support structure 42. In figure 1 note the vertical pin 40' for the directional rotation of the support arm 40 around the orientation axis Z-Z.

Advantageously, the vertical orientation axis Z-Z intersects the rotation axis of the rotor 5 between it and the air compressor 20. By virtue of the masses of the rotor 5 and of the air compressor 20, such arrangement makes it possible to reduce the oscillations of the support arm 40 and to correctly balance the generator so as to enable, in particular the support arm 40, to tilt, minimising friction and thereby following minimal variations in the wind direction .

According to a preferred embodiment, the air conveyor 22 is axial-symmetric in relation to the rotation axis X-X, so as to direct the flow of air symmetrically towards the rear rudder 30.

According to one advantageous embodiment, the air compressor 20 is of the two opposite pistons type. In fact, such type of air compressor 20 is highly efficient even at a low number of revs, such as 200 revs/minute, and may therefore be directly coupled to the rotation shaft 12 of the wind blade 8. Consequently, it is possible to avoid the use of intermediate gears, counter gears or other rev multiplier devices between the rotation shaft 12 of the rotor 5 and the air compressor shaft 20, reducing friction and thereby improving efficiency in transmission of the torque to the rotation shaft 12 of the rotor of the air compressor shaft 20. In addition, such air compressor 20 is able to self-lubricate even functioning at a low number of revs.

More in detail, the air compressor 20 comprises a central body 20' coaxial and coupled to the rotation shaft 12 of the rotor 5 and a pair of lateral expansions 20" which extend radially from opposite sides of said central body 20'. In each of said lateral expansions 20" one piston of the pair of opposite pistons is housed.

Advantageously, the air conveyor 22 has an outline which adapts to the shape of the air compressor 20. In particular, the air conveyor 22 therefore comprises two lateral portions 22" which surround and contain the lateral expansions 20" of the air compressor 20. Each lateral portion has an entrance aperture 23 of the air flow and exit aperture 24 of the air flow.

According to one embodiment, the coupling hub 5' of the wind blade 8 to the rotation shaft 12 is covered on the front by an ogive- shaped closed cap 6, with a tip coaxial to the rotation axis X-X.

In one embodiment, the air compressor 20 is axially distanced from the coupling hub 5' of the wind blade 8 to the rotation shaft 12. Advantageously, the air conveyor 22 comprises a central front portion 22' which connects frontally to the hub 5'. Said central front portion 22' of the air conveyor 22 is a substantially cylindrical shape with a cross-section substantially the same as that of the hub 5', so as to be a continuation of the ogive cap 6.

Rearwards, said central portion 22' connects to the lateral portions 22" of the air conveyor 22 delimiting with them the air entrance apertures 23.

Consequently, the ogive cap 6 covering the hub acts as a tapered tip for the air conveyor 22; thanks to such configuration, the air flow which frontally impacts the generator tends therefore to be directed towards the entrance apertures of the air conveyor 22, increasing both the cooling efficiency of the air compressor 20 and, coming out of the air conveyor 22, the pressure on the rear rudder 30.

Thanks to this configuration of the generator, moreover, which optimises the passage of the air flow in the air conveyor 22, it is possible to reduce the dimensions of the air conveyor 22 itself to the minimum required, especially in a transversal direction. Advantageously, this also entails that the wind blade 8, the active impact portion with the air flow of which extends outside said cap and therefore beyond the dimensions of the air conveyor 22, has no obstruction in front of it or behind it and the air flow which acts on said active portion is not "soiled" by the presence of the air conveyor 22.

Advantageously, the at least one wind blade 8 is twisted along its main extension axis Y-Y, perpendicular to the rotation axis X-X. More in detail, the wind blade 8 has a twisting axis S-S, which identifies a twisting angle α in relation to the main extension axis Y-Y.

According to a possible embodiment, the wind blade 8 may be composed of two or more elements fixed in relation to each other, for example with a slotted coupling.

According to a preferred embodiment, each wind blade 8 is joined to the rotation shaft 12 so as to rotate in relation to the main extension axis Y-Y and comprises motorised means (not shown) suitable to rotate the blade 8 in relation to said main extension axis Y-Y so as to vary the incidence in relation to the air flow 16.

Advantageously, moreover, each blade 8 is made from aluminium, extruded aluminium alloy or other lightweight materials. It may have a hollow, box-shaped cross-section provided with strengthening ribs 52. In one embodiment, said cross-section consists of two or more elements joined to each other.

Consequently, wind blades of considerable length may be used, limiting the weight of the rotor 5.

In one advantageous embodiment, an electro-pneumatic brake 60 suitable to limit the speed of rotation of the blades within a predefined safety value is operatively connected to the rotation shaft 12 of the rotor 5. Said brake 60 is controlled by a wind speed detector 62, for example an anemometer mounted on the air conveyor 22.

In one embodiment, the electro-pneumatic brake 60 comprises a pneumatic cylinder 64 acting on a spring 65 of a brake 65' operating directly on the rotation shaft 12 of the rotor 5. The pneumatic cylinder 64 is controlled by a relative solenoid valve 66. For example, the pneumatic cylinder 64 is normally pressurised so as to compress the spring 65 of the brake and leave the rotation shaft 12 free to rotate. In unsafe conditions of use or in the case of air leaks in the brake circuit, the pneumatic cylinder 64 suffers a pressure drop which prevents the corrpressi on of the spring and thereby enables the brake 65' to act on the rotation shaft 12.

In addition, in an errbodiment according to the invention, the rear rudder 30 is hinged to the support arm 40, so as to be rotatable in a position substantially orthogonal to said arm when the wind is excessively strong, so as to prevent the functioning of the generator. Such rotation of the rudder is for example triggered by an electro-pnematic safety device controlled by a wind speed detector 62, for example the anemometer mounted on the air conveyor 22.

In one embodiment, the safety device also comprises a pneumatic cylinder 64 acting on a spring suitable to cause the rudder 30 to rotate, and a solenoid valve 66 commanding said pneumatic cylinder 64. In this case too, advantageously, the pneumatic cylinder 64 is normally kept under pressure so as to compress the spring preventing rotation of the rudder 30; in the presence of excessively strong wind, the pneumatic cylinder 64 is discharged, depressurised, so as to leave the spring free to rotate the rudder.

Advantageously, the solenoid command valve 66 of the brake cylinder and/or safety device is powered electrically by a dynamo 68. Said dynamo 68 may be fitted with a turbine drivable in rotation by the compressed air produced by the air compressor 20, or, in the case of use of an anemometer 62, can be operatively connected to the rotation shaft of said anemometer 62.

In one embodiment, the solenoid command valve 66 receives the electric command signal from a dedicated control unit 67, mounted for example on the wind generator, connected to the wind speed detector 62.

Consequently, even the electro-pneumatic systems controlling the wind generator depending on the wind speed do not need to be electrically or pneumatically powered externally but withdraw energy from the generator itself.

The wind generator of compressed air according to the invention is part of a system 80 for the production and storage of compressed air. Such system comprises, as well as the wind generator 4 described above, at least one tank of compressed air 84 connected to the air compressor 20 by means of a compressed air duct 88 so as to receive and contain compressed air sent from the generator 4.

Advantageously, said compressed air duct 88 is connected to the air compressor 20 of the wind generator by means of a low friction swivel joint 90 and comprises specific piping, for example in aluminium. Consequently, the connection of the generator to the compressed air duct does not significantly limit the ability of the generator to tilt in relation to the vertical orientation axis.

In one embodiment, the system 80 further comprises a distribution line 92 of compressed air which can be connected to other pneumatic utilities and a traditional motor-compressor 94. For example, if the air compressor of the wind generator is scaled to power the pneumatic utilities, said motor compressor 94 may be considered an auxiliary compressor which intervenes to power the pneumatic utilities and/or the tank 84 in the case of prolonged absence of wind and therefore of a prolonged stop of the air compressor 20 of the wind generator. In any case, the compressor 20 of the wind generator can be used in conjunction with a traditional motor compressor 94 to achieve a significant energy saving.

An electro-pneumatic control panel 96 is positioned between the wind generator, tank, distribution line and the motor compressor programmed to manage the flows of compressed air from the wind generator 4 or from the motor compressor 94 to the distribution line 92 or to the tank 84. The control panel 96, for example comprising a PLC, receives information on the air pressure in the pneumatic utilities and in the tank thanks to respective pressure switches.

For example, when the wind generator 4 and therefore the relative air compressor 20 are active, the pneumatic utilities are powered exclusively or mainly by the wind generator 4. In the case of excess compressed air produced by the wind generator, the excess air is stored in the tank 84.

When the wind generator is at a standstill, the pneumatic utilities are powered by the compressed air contained in the tank 84.

In the case of prolonged standstill of the wind generator, the motor compressor 94 cuts in and powers the pneumatic utilities, if necessary filling the tank 84.

As may be appreciated from the description, the generator according to the invention makes it possible to overcome the limitations and drawbacks mentioned with reference to the prior art.

In particular, the wind generator gives high performance and is able to produce compressed air even in non-optimal wind conditions.

In fact, the wind generator is mounted on a swivelling support arm 40 able to tilt depending on the effective and instantaneous direction of the wind: this way it optimises the function of the wind blades in that it can self-direct in relation to the effective wind direction.

In addition, the blades are tilted and, preferably, are mounted on the rotor 5 so as to be able to vary their incidence in real time even during normal functioning of the blades.

Advantageously, the generator is fitted with a tapered reduced size air conveyor 22 able to both efficiently cool the air compressor mounted on the generator and to direct the flow of air traversing it towards the rear rudder 30.

Consequently, as regards the efficiency of the wind generator, the air compressor and the conveyor associated with it, as regards how they are positioned, configured and scaled, do not entail a reduction in performance of the generator. On the contrary, thanks to the special configuration of the air conveyor 22 which surrounds the air compressor 20, the generator is able to adapt in real time to minimal changes in the wind direction and/or intensity so as to enable optimal functioning of the wind blades.

Advantageously, the generator is configured so to perform cooling of the air compressor 20 using the same wind which drives the blades.

A further characteristic optimising the performance of the generator consists of the fact that the compressed air can be stored in a tank by means of a pipe which connects the air compressor 20 to the tank, fitted with a low friction high performance swivel joint. Such joint limits the pressure drops and resistance to rotation of the support arm 40.

The generator is particularly safe inasmuch as provided with dedicated systems limiting overload and preventing risks of structural collapse caused by excessively high winds. Advantageously, the compressed air produced by the wind generator is also used to power said safety devices pneumatically and electrically.

Consequently, the generator and system provide a plurality of characteristics, making it possible to optimise the production of compressed air both in terms of using wind energy and in terms of reducing loss of head in sending the air to the tank or pneumatic utilities.

Advantageously, the generator according to the present invention makes it possible to store large quantities of clean, low cost energy, in the form of compressed air.

Advantageously, the generator has a functioning which immediately adapts to the direction and intensity of the wind.

The generator is also simple, inexpensive to make and requires little maintenance, ensuring long duration and reliability.

A person skilled in the art may make numerous modifications and variations to the wind generator described above so as to satisfy contingent and specific requirements, all contained within the sphere of protection as defined by the appended claims.

## Claims

1. Wind generator (4) of compressed air, comprising:
- a rotor (5) comprising at least one wind blade (8), joined at one end to a rotation shaft (12) having a rotation axis (X-X) and suitable to be driven so as to rotate around said rotation axis (X-X), under the influence of a flow of air (16),
- at least one air compressor (20) operatively connected to said rotation shaft (12) so as to be driven by the rotation of the rotor (5) to produce compressed air, said air compressor (20) being positioned behind the rotor (5) in relation to the direction which the flow of air acting on said rotor (5) comes from,
- an air conveyor (22) which surrounds and contains the air compressor (20) at least partially and having at least one entrance aperture (23) suitable to convey on the air compressor (20) part of the flow of air acting on the rotor (5), and at least one exit aperture (24) suitable to convey the flow of air in exit at the rear to the air compressor (20), and
- a rear rudder (30) positioned downstream of the air compressor (20) to direct the rotor (5) perpendicular to the air flow;
wherein the rotation shaft (12), the air compressor (20), the air conveyor (22) and the rudder (30) are supported by a support arm (40) rotatably mounted in relation to a vertical orientation axis (Z-Z) so as to be able to tilt under the effect of the thrust of the air flow acting on the rear rudder (30);
said wind generator (4) being **characterized in that** the rear rudder (30) is hinged to the support arm (40), so as to be rotatable in a position substantially orthogonal to said arm, and **in that** said rotation of the rudder is triggered by an electro-pneumatic safety device controlled by a dedicated control unit (67) which receives in input an electric signal coming from a wind speed detector (62).

2. Generator according to claim 1, wherein said vertical orientation axis intersects the rotation axis of the rotor (5) between it and the air compressor (20).

3. Generator according to any of the previous claims, wherein the air compressor (20) is axially distanced from the rotor (5) and wherein the air conveyor (22) comprises a central front portion (22') which connects frontally to the coupling hub (5') of the at least one wind blade (8) to the rotation shaft (12), wherein said hub (5') is optionally covered on the front by an ogive-shaped closed cap (6), with a tip coaxial to the rotation axis (X-X).

4. Generator according to any of the previous claims, wherein the air conveyor (22) is axial-symmetric in relation to the rotation axis (X-X), so as to direct the flow of air symmetrically towards the rear rudder (30).

5. Generator according to any of the previous claims, wherein the air compressor (20) is of the two opposite piston type and comprises a central body (20') coaxial and coupled to the rotation shaft (12) and a pair of lateral extensions (20") which extend radially from opposite sides of said central body, in each lateral expansion (20") a piston being housed.

6. Generator according to any of the previous claims, wherein the rotation shaft (12) of the rotor (5) is directly connected to the shaft of the air compressor (20) .

7. Generator according to any of the previous claims, wherein the at least one blade (8) is twisted along its main extension axis (Y-Y), perpendicular to the rotation axis (X-X).

8. Generator according to claim 7, wherein each wind blade (8) has a twisting axis (S-S), which identifies a twisting angle (α) in relation to the main extension axis (Y-Y), and/or wherein each blade (8) is joined to the rotation shaft (12) so as to rotate in relation to the main extension axis (Y-Y) and comprises motorised means suitable to rotate the blade (8) in relation to said main extension axis (Y-Y) so as to vary the incidence in relation to the air flow (16).

9. Generator according to any of the previous claims, wherein the at least one blade (8) is made from extruded aluminium alloy or other lightweight materials.

10. Generator according to any of the previous claims, wherein the blade (8) has a hollow, box-shaped cross-section provided with strengthening ribs (52).

11. Generator according to any of the previous claims, comprising an electro-pneumatic brake (60) operatively connected to the rotation shaft (12) of the rotor (5) and controlled by a dedicated control unit (67) which receives in input an electric signal coming from a wind speed detector (62).

12. Generator according to claim 1 or 11, wherein said electro-pneumatic brake and /or safety device comprises at least one respective pneumatic cylinder (64) suitable to compress a spring of a brake acting directly on the rotation shaft (12) of the wind blade and/or suitable to compress a spring suitable to cause the rudder to rotate, respectively, and a solenoid valve (66) commanding said pneumatic cylinder (64).

13. Generator according to claim 12, wherein said solenoid valve (66) is powered electrically by a dynamo (68) operatively connected to the rotation shaft of the wind speed detector (62) or placed in rotation by the compressed air produced by the air compressor (20).

14. System for the production and storage of compressed air (80), comprising a wind generator (4) according to any of the previous claims, at least one tank of compressed air (84) and a compressed air duct (88) fluidically connecting the generator (4) to the tank (84) so as to enable said tank to receive and contain the compressed air sent from the generator (4).

15. System (60) according to claim 14, further comprising a distribution line (92) of compressed air which can be connected to pneumatic utilities and a traditional motor-compressor (94), a control panel (96) being positioned between the wind generator (4), the tank (84), the distribution line (92) and the motor compressor (94) programmed to manage the flows of compressed air from the wind generator or from the motor compressor to the distribution line or to the tank.

## Patentansprüche

1. Druckluft-Windkraftgenerator (4), Folgendes umfassend:
- einen Rotor (5), der mindestens ein Windrotorblatt (8) umfasst, das an einem Ende an eine Drehwelle (12) gefügt ist, die eine Drehachse (X-X) aufweist und geeignet ist, angetrieben zu werden, um sich unter dem Einfluss eines Luftstroms (16) um die Drehachse (X-X) zu drehen,
- mindestens einen Luftverdichter (20), der in Wirkverbindung mit der Drehwelle (12) ist, sodass er von der Drehung des Rotors (5) angetrieben wird, um verdichtete Luft zu erzeugen, wobei der Luftverdichter (20) in Bezug auf die Richtung, aus der der Luftstrom kommt, der auf den Rotor (5) einwirkt, hinter dem Rotor (5) positioniert ist,
- einen Luftförderer (22), der den Luftverdichter (20) mindestens teilweise umgibt und einschließt und mindestens eine Eintrittsöffnung (23), die geeignet ist, um einen Teil des Luftstroms, der auf den Rotor (5) einwirkt, auf den Luftverdichter (20) zu fördern, und mindestens eine Austrittsöffnung (24), die geeignet ist, den Luftstrom beim Austreten an der Rückseite des Luftverdichters (20) zu fördern, aufweist, und
- ein rückseitiges Ruder (30), das dem Luftverdichter (20) nachgelagert positioniert ist, um den Rotor (5) senkrecht zu dem Luftstrom zu leiten;
wobei die Drehwelle (12), der Luftverdichter (20), der Luftförderer (22) und das Ruder (30) von einem Stützarm (40) gestützt werden, der in Bezug auf eine vertikale Ausrichtungsachse (Z-Z) drehbar montiert ist, sodass er sich unter der Wirkung der Schubkraft des Luftstroms, der auf das rückseitige Ruder (30) einwirkt, neigen kann;
wobei der Windkraftgenerator (4) **dadurch gekennzeichnet ist, dass** das rückseitige Ruder (30) an dem Stützarm (40) klappbar montiert ist, sodass es in einer Position, die im Wesentlichen orthogonal zu dem Arm ist, drehbar ist, und dadurch, dass die Drehung des Ruders mittels einer elektropneumatischen Sicherheitsvorrichtung ausgelöst wird, die mittels einer zweckbestimmten Steuer- bzw. Regeleinheit (67) gesteuert bzw. geregelt wird, die eine Eingabe eines elektrischen Signals empfängt, das von einem Windgeschwindigkeitsdetektor (62) kommt.

2. Generator nach Anspruch 1, wobei die vertikale Ausrichtungsachse die Drehachse des Rotors (5) zwischen diesem und dem Luftverdichter (20) schneidet.

3. Generator nach einem beliebigen der vorhergehenden Ansprüche, wobei der Luftverdichter (20) axial von dem Rotor (5) beabstandet ist und wobei der Luftförderer (22) einen mittleren vorderen Abschnitt (22') umfasst, der frontal mit der Kupplungsnabe (5') des mindestens einen Windrotorblatts (8) und der Drehachse (12) verbunden ist, wobei die Nabe (5') optional auf der Vorderseite von einer spitzbogenförmigen geschlossenen Kappe (6) mit einer mit der Drehachse (X-X) koaxialen Spitze abgedeckt ist.

4. Generator nach einem beliebigen der vorhergehenden Ansprüche, wobei der Luftförderer (22) in Bezug auf die Drehachse (X-X) achsialsymmetrisch ist, sodass er den Luftstrom symmetrisch zu dem rückseitigen Ruder (30) hin leitet.

5. Generator nach einem beliebigen der vorhergehenden Ansprüche, wobei der Luftverdichter (20) von dem Typ zwei einander gegenüberliegender Kolben ist und einen mittleren Körper (20'), der koaxial mit der Drehwelle (12) ist und an diese gekoppelt ist, und ein Paar lateraler Verlängerungen (20''), die sich radial von gegenüberliegenden Seiten des mittleren Körpers erstrecken, umfasst, wobei in jeder der lateralen Verlängerungen (20'') ein Kolben untergebracht ist.

6. Generator nach einem beliebigen der vorhergehenden Ansprüche, wobei die Drehwelle (12) des Rotors (5) direkt mit der Welle des Luftverdichters (20) verbunden ist.

7. Generator nach einem beliebigen der vorhergehenden Ansprüche, wobei das mindestens eine Blatt (8) senkrecht zu der Drehachse (X-X) entlang seiner Haupterstreckungsachse (Y-Y) gewunden ist.

8. Generator nach Anspruch 7, wobei jedes Windrotorblatt (8) eine Windungsachse (S-S) aufweist, die einen Windungswinkel (α) in Bezug auf die Haupterstreckungsachse (Y-Y) identifiziert, und/oder wobei jedes Blatt (8) an die Drehwelle (12) gefügt ist, sodass es sich in Bezug auf die Haupterstreckungsachse (Y-Y) dreht und motorisierte Mittel umfasst, die geeignet sind, das Blatt (8) in Bezug auf die Haupterstreckungsachse (Y-Y) zu drehen, sodass der Einfallswinkel in Bezug auf den Luftstrom (16) variiert wird.

9. Generator nach einem beliebigen der vorhergehenden Ansprüche, wobei das mindestens eine Blatt (8) aus extrudierter Aluminiumlegierung oder anderen leichten Materialien hergestellt ist.

10. Generator nach einem beliebigen der vorhergehenden Ansprüche, wobei das Blatt (8) einen hohlen kastenförmigen Querschnitt aufweist, der mit verstärkenden Rippen (52) vorgesehen ist.

11. Generator nach einem beliebigen der vorhergehenden Ansprüche, umfassend eine elektropneumatische Bremse (60), die in Wirkverbindung mit der Drehachse (12) des Rotors (5) ist und mittels einer zweckbestimmten Steuer- bzw. Regeleinheit (67) gesteuert bzw. geregelt wird, die eine Eingabe eines elektrischen Signals empfängt, das von einem Windgeschwindigkeitsdetektor (62) kommt.

12. Generator nach Anspruch 1 oder 11, wobei die elektropneumatische Bremse und/oder Sicherheitsvorrichtung mindestens Folgendes umfasst: einen jeweiligen Pneumatikzylinder (64), der geeignet ist, eine Feder einer Bremse zu komprimieren, die direkt auf die Drehachse (12) des Windrotorblatts einwirkt, bzw. und/oder der geeignet ist, eine Feder zu komprimieren, die geeignet ist, das Ruder zum Drehen zu veranlassen, und ein Magnetventil (66), das den Pneumatikzylinder (64) kontrolliert.

13. Generator nach Anspruch 12, wobei das Magnetventil (66) elektrisch mittels eines Dynamos (68) angetrieben wird, der in Wirkverbindung mit der Drehachse des Windgeschwindigkeitsdetektors (62) ist, oder mittels der Druckluft in Drehung versetzt wird, die von dem Luftverdichter (20) erzeugt wird.

14. System für die Herstellung und Speicherung von Druckluft (80), umfassend einen Windkraftgenerator (4) nach einem beliebigen der vorhergehenden Ansprüche, mindestens einen Drucklufttank (84) und eine Druckluftleitung (88), die den Generator (4) fluidisch mit dem Tank (84) verbindet, sodass es dem Tank ermöglicht wird, die Druckluft, die von dem Generator (4) geschickt wird, zu empfangen und zu halten.

15. System (60) nach Anspruch 14, überdies umfassend eine Verteilungsleitung (92) für Druckluft, die mit pneumatischen Betriebsmitteln und einem herkömmlichen Motor-Verdichter (94) verbunden werden kann, wobei ein Bedienfeld (96) zwischen dem Windkraftgenerator (4), dem Tank (84), der Verteilungsleitung (92) und dem Motor-Verdichter (94) positioniert ist, das programmiert ist, die Druckluftströme von dem Windkraftgenerator oder von dem Motor-Verdichter zu der Verteilungsleitung oder zu dem Tank zu lenken.

## Revendications

1. Générateur éolien (4) d'air comprimé, comprenant :
- un rotor (5) comprenant une pale d'éolienne (8), assemblée à une extrémité à un arbre de rotation (12) ayant un axe de rotation (X-X) et apte à être entraînée de façon à tourner autour dudit axe de rotation (X-X), sous l'influence d'un flux d'air (16),
- au moins un compresseur d'air (20) raccordé de façon fonctionnelle audit arbre de rotation (12) de façon à être entraîné par la rotation du rotor (5) pour produire de l'air comprimé, ledit compresseur d'air (20) étant positionné derrière le rotor (5) par rapport à la direction d'où vient le flux d'air agissant sur ledit rotor (5),
- un convoyeur d'air (22) qui entoure et contient le compresseur d'air (20) au moins partiellement et ayant au moins une ouverture d'entrée (23) adaptée pour acheminer sur le compresseur d'air (20) une partie du flux d'air agissant sur le rotor (5), et au moins une ouverture de sortie (24) adaptée pour acheminer le flux d'air en sortie au niveau de l'arrière vers le compresseur d'air (20), et
- un gouvernail arrière (30) positionné en aval du compresseur d'air (20) pour diriger le rotor (5) perpendiculairement au flux d'air ;
dans lequel l'arbre de rotation (12), le compresseur d'air (20), le convoyeur d'air (22) et le gouvernail (30) sont supportés par un bras de support (40) monté de manière rotative par rapport à un axe d'orientation vertical (Z-Z) de façon à pouvoir s'incliner sous l'effet de la poussée du flux d'air agissant sur le gouvernail arrière (30) ;
ledit générateur éolien (4) étant **caractérisé en ce que** le gouvernail arrière (30) est articulé au bras de support (40), de façon à pouvoir entrer en rotation dans une position sensiblement orthogonale audit bras, et **en ce que** ladite rotation du gouvernail est déclenchée par un dispositif de sécurité électropneumatique commandé par une unité de commande dédiée (67) qui reçoit en entrée un signal électrique venant d'un détecteur de vitesse du vent (62).

2. Générateur selon la revendication 1, dans lequel ledit axe d'orientation vertical coupe l'axe de rotation du rotor (5) entre lui et le compresseur d'air (20).

3. Générateur selon l'une quelconque des revendications précédentes, dans lequel le compresseur d'air (20) est axialement à distance du rotor (5) et dans lequel le convoyeur d'air (22) comprend une partie avant centrale (22') qui se raccorde à l'avant au moyeu de couplage (5') de l'au moins une pale d'éolienne (8) à l'arbre de rotation (12), dans lequel ledit moyeu (5') est facultativement recouvert sur l'avant par un capot fermé en forme d'ogive (6) avec un embout coaxial à l'axe de rotation (X-X).

4. Générateur selon l'une quelconque des revendications précédentes, dans lequel le convoyeur d'air (22) est symétrique axialement par rapport à l'axe de rotation (X-X), de façon à diriger le flux d'air symétriquement vers le gouvernail arrière (30).

5. Générateur selon l'une quelconque des revendications précédentes, dans lequel le compresseur d'air (20) est du type à deux pistons opposés et comprend un corps central (20') coaxial et couplé à l'arbre de rotation (12) et une paire d'extensions latérales (20") qui s'étendent radialement à partir de côtés opposés dudit corps central, un piston étant logé dans chaque extension latérale (20").

6. Générateur selon l'une quelconque des revendications précédentes, dans lequel l'arbre de rotation (12) du rotor (5) est raccordé directement à l'arbre du compresseur d'air (20).

7. Générateur selon l'une quelconque des revendications précédentes, dans lequel l'au moins une pale (8) est torsadée le long de son axe d'extension principal (Y-Y), perpendiculairement à l'axe de rotation (X-X).

8. Générateur selon la revendication 7, dans lequel chaque pale d'éolienne (8) a un axe de torsion (S-S), qui identifie un angle de torsion (α) par rapport à l'axe d'extension principal (Y-Y), et/ou dans lequel chaque pale (8) est assemblée à l'arbre de rotation (12) de façon à entrer en rotation par rapport à l'axe d'extension principal (Y-Y) et comprend des moyens motorisés adaptés pour faire entrer en rotation la pale (8) par rapport audit axe d'extension principal (Y-Y) de façon à faire varier l'incidence par rapport au flux d'air (16).

9. Générateur selon l'une quelconque des revendications précédentes, dans lequel l'au moins une pale (8) est faite à partir d'alliage d'aluminium extrudé ou d'autres matériaux légers.

10. Générateur selon l'une quelconque des revendications précédentes, dans lequel la pale (8) a une section transversale en forme de boîte creuse dotée de nervures de renforcement (52).

11. Générateur selon l'une quelconque des revendications précédentes, comprenant un frein électropneumatique (60) raccordé de manière fonctionnelle à l'arbre de rotation (12) du rotor (5) et commandé par une unité de commande dédiée (67) qui reçoit en entrée un signal électrique venant d'un détecteur de vitesse du vent (62).

12. Générateur selon la revendication 1 ou 11, dans lequel ledit frein électropneumatique et/ou dispositif de sécurité comprend au moins un vérin pneumatique respectif (64) apte pour comprimer un ressort d'un frein agissant directement sur l'arbre de rotation (12) de la pale d'éolienne et/ou adapté pour comprimer un ressort apte à entraîner la rotation du gouvernail, respectivement, et une électrovanne (66) commandant ledit vérin pneumatique (64).

13. Générateur selon la revendication 12, dans lequel ladite électrovanne (66) est alimentée électriquement par une dynamo (68) raccordée de manière fonctionnelle à l'arbre de rotation du détecteur de vitesse du vent (62) ou placée en rotation par l'air comprimé produit par le compresseur d'air (20).

14. Système pour la production et le stockage d'air comprimé (80), comprenant un générateur éolien (4) selon l'une quelconque des revendications précédentes, au moins un réservoir d'air comprimé (84) et un conduit d'air comprimé (88) raccordant de manière fluidique le générateur (4) au réservoir (84) de façon à permettre audit réservoir de recevoir et de contenir l'air comprimé envoyé à partir du générateur (4).

15. Système (60) selon la revendication 14, comprenant en outre une ligne de distribution (92) d'air comprimé qui peut être raccordée à des équipements pneumatiques et un compresseur à moteur traditionnel (94), un panneau de commande (96) étant positionné entre le générateur éolien (4), le réservoir (84), la ligne de distribution (92) et le compresseur à moteur (94) programmé pour gérer les flux d'air comprimé à partir du générateur éolien ou à partir du compresseur à moteur vers la ligne de distribution ou vers le réservoir.
